# EUROPÄISCHE PATENTSCHRIFT

(11) **EP 2 889 118 B1**
(45) Veröffentlichungstag und Bekanntmachung des Hinweises auf die Patenterteilung: **26.12.2018**
(21) Anmeldenummer: 14004211.0
(22) Anmeldetag: 13.12.2014
(51) Int. Cl.: B29C 47/08, B29C 47/40, F16D 1/02, B29C 47/60, B29B 7/46

(54) **Schmelzepumpe zum Durchdrücken von Kunststoffschmelze durch ein Werkzeug**
Melt pump for extruding plastic melt through a tool
Pompe de masse fondue pour faire passer une matière plastique en fusion par un outil

(30) Priorität: 26.12.2013 DE 102013021902
(43) Veröffentlichungstag der Anmeldung: 01.07.2015
(73) Patentinhaber: Henke Property UG (Haftungsbeschränkt), 34121 Kassel (DE)
(72) Erfinder: Henke, Matthias, 34121 Kassel (DE)
(74) Vertreter: Patentanwälte Walther Hinz Bayer PartGmbB

(56) Entgegenhaltungen:
- EP-A1- 0 132 525
- EP-A1- 1 008 437
- EP-A1- 1 574 316
- EP-A1- 2 048 394
- WO-A1-2010/109486
- GB-A- 1 483 302

## Beschreibung

Die vorliegende Erfindung betrifft eine Schmelzepumpe zum Aufbau von Druck zwecks Durchdrücken von Kunststoffschmelze durch ein Werkzeug gemäß dem Oberbegriff des Anspruches 1.
Zur Herstellung von Kunststoffteilen wird zunächst in einem Polymerisationsprozess aus verschiedenen Ausgangsstoffen in einer Schneckenmaschine eine Kunststoffschmelze erzeugt. Der Kunststoffschmelze können auch Zusatzstoffe wie zum Beispiel Kalziumkarbonat, Holzspäne, Glaskugeln oder dergleichen zugefügt sein. Es versteht sich, dass unter Kunststoffschmelze auch derartige Schmelzen zu verstehen sind, die aus Nachwachsenden Rohstoffen, wie zum Beispiel aus Eiweiß, hergestellt werden. Eine solche Schneckenmaschine kann ein Compounder, ein Extruder, ein Schneckenkneter oder einer ähnlichen Vorrichtung zur Herstellung einer Kunststoffschmelze sein.

Zum Beispiel aus der EP 0 564 884 A1 ist eine Schneckenmaschine bekannt, in der verschiedene Ausgangsstoffe mittels gleichlaufender Schneckenwellen miteinander vermengt und geknetet werden, bis eine fließfähige Kunststoffschmelze vorliegt.

Zur Herstellung eines Kunststoffgranulates, welches dann zum Beispiel in Kunststoffspritzmaschinen weiterverarbeitet wird, wird die Kunststoffschmelze mit bis zu 30 bar durch ein Werkzeug, hier eine Lochscheibe, gedrückt. Zur Herstellung eines Kunststoffprofils oder eines Kunststoffformteiles muss die Kunststoffschmelze in einem Strangpressverfahren mit bis zu 300 bar durch ein entsprechendes Strangpress- oder Formteil-Werkzeug gepresst werden.

Wie aus der EP 0 564 884 A1 bekannt ist, kann die Kunststoffschmelze von der Schneckenmaschine an eine Zahnradpumpe, wie sie beispielsweise aus der DE-OS 38 42 988 bekannt ist, übergeben werden und von dieser durch das Werkzeug hindurchgedrückt oder gepresst werden, um das gewünschte Granulat, Profil oder Formteil zu erhalten.

Nachteilig an der separaten Zahnradpumpe ist aber, dass diese, unter anderem wegen des eigenen Antriebs und der notwendigen eigenen Steuerung, teuer in der Herstellung ist. Ein weiteres Problem der Zahnradpumpe mit eigenem Antrieb besteht darin, dass insbesondere bei niedrigen Drehzahlen bis 50 U/Min, bauartbedingt eine Pulsation entsteht, die das hienfördern der Kunststoffschmelze in die Zahnradpumpe erschwert. Darüber hinaus wird bei der Übergabe der Kunststoffschmelze an das Werkzeug nicht sämtliche Kunststoffschmelze durch das Werkzeug hindurchgepresst, sondern vielmehr gelangt ein Teil der Kunststoffschmelze zurück zur Pumpeneintrittsöffnung, wo sich ein entsprechender, nicht unerheblicher Vordruck aufbaut. Weil dieser Vordruck aber nicht gleichmäßig, sondern nur in gewissen, pulsartigen Abständen auftritt, liegt eine Pulsation vor. Um diesen pulsartigen Vordruck zu überwinden, muss die Schmelze mit einem entsprechenden Druck übergeben werden, was einen ausreichenden Druckaufbau am Ende der Schneckenmaschine erforderlich macht.

Anstelle der Zahnradpumpe wird häufig auch eine Einschneckenpumpe mit eigenem Antrieb eingesetzt. Aber auch bei der Einschneckenpumpe liegt bauartbedingt am Pumpeneintritt ein nicht unerheblicher Vordruck an, der von der Schneckenmaschine überwunden werden muss, um die Schneckengänge zu füllen.

Somit hat der Einsatz einer Zahnradpumpe oder einer Einschneckenpumpe lediglich den Vorteil, dass die Druckerhöhungseinheit der Schneckenmaschine verkleinert werden kann, aber ein gänzlicher Verzicht auf die Druckerhöhungsmöglichkeit ist nicht möglich, denn der anliegende Vordruck muss notwendigerweise von der Schneckenmaschine noch überwunden werden.

Ein anderer Nachteil der Zahnradpumpe und der Einschneckenpumpe besteht darin, dass nach Beendigung des Einsatzes zwischen den Zahnrädern oder im Schneckengang Kunststoffschmelze zurückbleibt und die Zahnradpumpe bzw. die Einschneckenpumpe aufwendig gereinigt werden muss.

Die EP 0 564 884 A1 lehrt, die Zahnradpumpe in die Schneckenmaschine zu integrieren, so dass ein einziger Antrieb die Schneckenwellen mit der daran angebrachten Zahnradpumpe antreibt. Dies hat den Vorteil, dass die Zahnradpumpe mit der gleichen hohen Drehzahl wie die Schneckenwellen betrieben wird und somit die Pulsation auf ein Minimum reduziert wird.

Aus der EP 1 365 906 B1 ist ein Zweischneckenextruder mit integrierter Schneckenpumpe bekannt, bei dem an die gleichlaufenden Schneckenwellen zwei eine Druckerhöhung bewirkende Schneckenelemente angebracht sind. Aufgrund einer bestimmten Schneckengeometrie bilden sich zwischen den Schneckenelementen Kammern aus, die eine volumetrische Zwangsförderung der Kunststoffschmelze erlauben, so dass ein Druckaufbau erreicht wird. Allerdings ist es dann sowohl bei der Schneckenmaschine gemäß EP 0 564 884 A1, als auch bei dem Zweischneckenextruder gemäß EP 1 365 906 B1 erforderlich, den Antrieb der gesamten Anlage zu vergrößern, weil nun für die Druckerhöhung und für den Misch- und Knetvorgang gleichzeitig Kraft und Energie vom Antrieb bereitgestellt werden muss. Folglich muss ein viel stärkerer Elektromotor und entsprechend verstärkte Getriebe, Wellen, Gehäuse etc. vorgesehen werden.

Bei der Schneckenmaschine gemäß EP 0 564 884 A1 und bei dem Zweischneckenextruder gemäß EP 1 365 906 B1 haben die integrierte Zahnradpumpe und die die Druckerhöhung bewirkenden Schneckenelemente dieselbe Drehzahl, wie die zum Mischen und Kneten eingesetzten Schneckenwellen. Um eine homogene Kunststoffschmelze zu erreichen wird eine hohe Drehzahl benötigt. In der Zahnradpumpe genauso wie bei den die Druckerhöhung bewirkenden Schneckenelementen erzeugt diese hohe Drehzahl aber eine hohe Reibung, die einen hohen Kraft- und Energieaufwand und eine hohe Wärmeentwicklung zur Folge hat. Die Wärme wird dabei an die Kunststoffschmelze abgegeben, was aber zu einer Beeinträchtigung oder im Extremfall auch zu einer Beschädigung der Kunststoffschmelze führen kann. Folglich sind die Anwendungsmöglichkeiten einer integrierten Zahnradpumpe und der speziellen Schneckenelemente begrenzt. Abgemildert wird dieses Problem dadurch, dass je nach eingesetzter Kunststoffschmelze eine individuell angepasste Zahnradpumpe oder individuell ausgebildete Schneckenelemente eingesetzt werden. Auch wirken sich diese Reibungsverluste auf den Antrieb und die gesamte Anlage aus, die entsprechend größer dimensioniert werden muss. Dies führt aber zu einem hohen Aparativen Aufwand, zu hohen Rüstkosten und zu einem sehr hohen Verschleiß. Die Druckschriften EP 0132 525 A1 und EP1008437 A1 offenbaren weitere Schmelzepumpen.

Dabei liegt der Erfindung die Erkenntnis zugrunde, dass die Einbindung einer Druckerhöhungseinheit in eine Schneckenmaschine nur mit erhöhtem apparativen Aufwand möglich ist und vor allem, dass sowohl bei der Druckerhöhungseinheit, als auch bei der Schneckenmaschine Kompromisse eingegangen werden müssen, so dass keine dieser Komponenten optimal ausgelegt werden kann.
Daraufhin wurde in der DE 10 2013 010 505.6 eine Vorrichtung zur Herstellung von Kunststoffgranulat, Strangpressprofilen oder Formteilen aus Kunststoffschmelze beschrieben, bei der die Schneckenmaschine ausschließlich zum Mischen und Kneten der Kunststoffschmelze eingesetzt wird, während die Schmelzepumpe konsequent zur Druckerhöhung ausgelegt ist.
Die Schmelzepumpe gemäß dem Oberbegriff des Anspruches 1 ist bereits in der DE 10 2013 010 505.6 beschrieben, auf die an dieser Stelle voll inhaltlich Bezug genommen wird. Bei einer derart konsequent auf Druckerhöhung ausgelegten Schmelzepumpe mit zwei Förderschnecken ist es wichtig, dass der sich zwischen den Schneckenstegen ausgebildete Schneckenspalt auf die jeweils zu verarbeitende Kunststoffschmelze angepasst wird. So wird zum Beispiel bei Polyethylen (PE) ein Schneckenspalt von 0,1 mm bevorzugt, während zum Beispiel bei einer Kunststoffschmelze mit einem hohen Anteil an Kalziumkarbonat ein Schneckenspalt von 0,5 mm bevorzugt wird. Bei anderen Zusatzstoffen, zum Beispiel bei Holzspänen oder Glasperlen kann auch ein Schneckenspalt von 1 mm oder 2 mm angemessen sein.

Davon ausgehend liegt der vorliegenden Erfindung die Aufgabe zu Grunde, eine Schmelzepumpe der eingangs genannten Art zu schaffen, bei der der Schneckenspalt zwischen den beiden Förderschnecken in einfacher Weise beliebig eingestellt werden kann.

Als technische Lösung dieser Aufgabe wird erfindungsgemäß eine Schmelzepumpe der eingangs genannten Art mit den Merkmalen des Anspruches 1 vorgeschlagen. Vorteilhafte Weiterbildungen dieser Schmelzepumpe sind den Unteransprüchen zu entnehmen.

Eine nach dieser technischen Lehre ausgebildete Schmelzepumpe hat den Vorteil, dass die Förderschnecken aufgrund der in einfacher Weise lösbaren Kupplung schnell und unkompliziert vom Getriebe getrennt werden können. Dies wiederum ermöglicht es auch die Förderschnecken relativ zueinander um die Längsachse zu verdrehen und in dieser neuen Winkelstellung wieder mit dem Getriebe zu verbinden. Hierdurch kann der sich zwischen den Förderschnecken ausgebildete Schneckenspalt der zu verarbeitenden Kunststoffschmelze angepasst werden. Dabei hat es sich als besonders vorteilhaft erwiesen, den Abtriebszahnkranz auf der Abtriebswelle mit einer anderen Teilung zu versehen, wie den Antriebszahnkranz auf der Förderschnecke. Die unterschiedliche Teilung, das heißt die unterschiedliche Anzahl von Zähnen im jeweiligen Zahnkranz, erlaubt eine sehr viel größere Anzahl von Positionen in der die Förderschnecke an der Antriebswelle angebracht werden kann. Folglich kann der Schneckenspalt viel präziser eingestellt werden.

In einer bevorzugten Ausführungsform weisen auch die Antriebszahnkränze der ersten und der zweiten Förderschnecke eine unterschiedliche Anzahl von Zähnen auf. Bei nunmehr drei verschiedenen Zahnkränzen vergrößert sich die Anzahl der möglichen Positionen weiter.

Analoges gilt für den Fall, dass die Abtriebszahnkränze der ersten und der zweiten Abtriebswelle eine unterschiedliche Anzahl von Zähnen aufweist.

In einer besonders bevorzugten Ausführungsform weisen alle vier Zahnkränze an den beiden Abtriebswellen und den beiden Förderschnecken eine unterschiedliche Teilung auf, so dass besonders viele Positionen zur Winkelverstellung der Förderschnecken zur Verfügung stehen. Hierdurch ist es möglich, den Schneckenspalt besonders präzise einzustellen. Weil die Ermittlung der idealen Verzahnungskombination sehr komplex ist, wird in der Praxis hierfür eine entsprechende Software eingesetzt.

In einer weiteren, bevorzugten Ausführungsform umfasst die Kupplung eine Einstellscheibe, mit der die axiale Position der Förderschnecke eingestellt werden kann. Dabei wird die tatsächliche, axiale Position der Förderschnecke ermittelt und die Dicke der Einstellscheibe so gewählt, dass die Förderschnecke im montierten Zustand die gewünschte Position einnimmt.

In einer bevorzugten Weiterbildung kann die Einstellscheibe der ersten Kupplung eine unterschiedliche Dicke gegenüber der Einstellscheibe der zweiten Kupplung aufweisen, so dass über die Einstellscheiben ebenfalls der Schneckenspalt eingestellt werden kann. Dies ermöglicht eine noch präzisere Einstellung des Schneckenspaltes.

In einer weiteren, vorteilhaften Ausführungsform sind zwei Förderschnekken übereinander, also vertikal zueinander angeordnet. Dies hat den Vorteil, dass die Eintrittsöffnung mittig gegenüber den Förderschnecken angeordnet werden kann, so dass die ankommende Schmelze von beiden Förderschnecken gut erfasst wird und somit ein hoher Füllgrad erreicht wird. Außerdem hat dies den Vorteil, dass die Eintrittsöffnung seitlich an der Schmelzepumpe angeordnet werden kann, so dass ein radialer Eintritt und ein radialer Austritt des Mediums erfolgt. Dies wiederum erlaubt eine gewinkelte Anordnung der Schmelzepumpe gegenüber der Schneckenmaschine mit dem Vorteil, dass sich die Gesamtlänge der Vorrichtung reduziert. Beispielsweise kann die Schmelzepumpe in einem Winkel von 45° zur Schneckenmaschine aufgestellt werden, was zu einer hohen Platzersparnis führt.

In einer vorteilhaften Ausführungsform sind die Förderschnecken so ausgeführt, dass das Verhältnis von Außendurchmesser (Dₐ) zu Kerndurchmesser (Dᵢ) bei 2 liegt. In einer anderen Ausführungsform, zum Beispiel beim Einsatz von Eiweiß in der Kunststoffschmelze, liegt das Verhältnis von Außendurchmesser zu Kerndurchmesser bei 5. Je nach Art der Kunststoffschmelze kann auch ein Verhältnis von Dₐ zu Dᵢ zwischen 1,6 und 6 gewählt werden. Hierdurch wird bei einer vergleichsweise dünnen und damit kostengünstigen Schnecke ein großes Fördervolumen erreicht.

Eine nach dieser technischen Lehre ausgebildete Vorrichtung und eine nach dieser technischen Lehre ausgebildete Schmelzepumpe haben den Vorteil, dass aufgrund der Zwangsförderung der Schmelze in der Schmelzepumpe an der Eintrittsöffnung der Schmelzepumpe kein nennenswerter Vordruck anliegt, so dass die Schmelze drucklos von der Schneckenmaschine an die Schmelzepumpe übergehen kann. Einzig die zum Transport der Kunststoffschmelze erforderlichen Kräfte, zum Beispiel zur Überwindung der Trägheit der Schmelze, der Reibung uns so weiter (auch Massedruck genannt) müssen von der Schneckenmaschine aufgebracht werden und können je nach Beschaffenheit der Schmelze zu einer geringen Druckerhöhung von 0,1 bis 0,4 bar führen. Derartige Kräfte können aber von der Schnecke der Schneckenmaschine selbst aufgebracht werden, so dass in der Schneckenmaschine auf eine Druckerhöhungsvorrichtung verzichtet werden kann. Dies wiederum hat den Vorteil, dass eine Schneckenmaschine ohne Druckerhöhungsvorrichtung mit einem kleineren Antrieb, hier einem kleineren Elektromotor, ggf. einem kleineren Getriebe, einer kleineren Schnecke, einem kleineren Gehäuse und andere kleineren Bauteilen betrieben werden kann, da die zu übertragenden Kräfte nun sehr viel geringer sind. Dies führt zu einer deutlichen Reduzierung der Fertigungskosten der Schneckenmaschine. Damit einher geht auch eine Reduzierung der Energiekosten.

Durch den Wegfall der Druckerhöhungsvorrichtung entsteht weiterhin der Vorteil, dass die Schneckenmaschine nun konsequent zum Mischen der Ausgangsstoffe und zur Erzeugung der Kunststoffschmelze hin ausgelegt werden kann, was den Wirkungsgrad und damit auch die Wirtschaftlichkeit der Schneckenmaschine verbessert. Gleichzeitig wird die Schneckenmaschine weniger stark belastet, was zu einem geringeren Verschleiß führt.

Noch ein Vorteil besteht darin, dass nach der Separierung der Schmelzepupe von der Schneckenmaschine die Schmelzepumpe einzig zur Erzielung einer effektiven Druckerhöhung konstruiert und ausgelegt werden kann.

Überraschender Weise hat sich beim Bau und Betrieb eines Prototypes der erfindungsgemäßen Vorrichtung herausgestellt, dass die Summe der elektrischen Leistung der Antriebe der Schneckenmaschine und der Schmelzepumpe kleiner war, als die elektrische Leistung einer entsprechenden Vorrichtung gemäß dem Stand der Technik. Somit wurde durch die Trennung von Schneckenmaschine und Schmelzepumpe neben einer Reduzierung der Fertigungskosten der Vorrichtung (aufgrund kleinerer Bauteile) auch eine Reduzierung der Energiekosten zur Herstellung des Kunststoffgranulates, der Strangpressprofile und der Formteile erreicht.

In einer anderen, vorteilhaften Ausführungsform besitzen die Schneckenstege ein rechteckiges oder trapezförmiges Gewindeprofil. Hierdurch wird eine gute Zwangsförderung der Schmelze erreicht, insbesondere wenn der Flankenwinkel (auch Profilwinkel genannt) zwischen 0° und 20° gewählt wird. Die Gestaltung der Schneckenstege sollte an die einzusetzende Schmelze angepasst werden, so hat sich zum Beispiel bei der Verarbeitung von Polyethylen (PE) ein Profilwinkel von 0° bewährt, während PVC besser bei einem Profilwinkel von 13° zu verarbeiten ist.

In einer bevorzugten Ausführungsform weist der Schneckensteg eine plane Oberfläche auf, was ebenfalls zu einer kostengünstigen Fertigung beiträgt.

Aufgrund der Ausbildung des Schneckensteges mit einer planen Flanke, einem Flankenwinkel von 0° und einer planen Oberfläche erhält der Schneckensteg einen rechtwinkeligen Querschnitt. Insbesondere wenn dann der Abstand der Schneckenstege nach jeder Steigung annähernd der Breite des Schneckensteges entspricht, wird ein gleichmäßiger, auf ein Minimum reduzierter Schneckenspalt erreicht, mit dem die entsprechende Schneckenkammer abgedichtet wird. Diese Abdichtung ermöglicht den hohen Druckaufbau an dem Werkzeug, insbesondere an der Lochscheibe.

In noch einer weiteren, bevorzugten Ausführungsform greifen die Schnekkenstege der beiden Förderschnecken derart ineinander, dass der an der engsten Stelle verbleibende Schneckenspalt eine Spaltdichtung bildet. Diese Spaltdichtung, verhindert einerseits den Rückfluss des Mediums und erhöht die Zwangsförderung und andererseits fungiert die Spaltdichtung als Überdruckausgleich. Durch die Zwangsförderung wird ein hoher Druckaufbau erreicht und gleichzeitig wird durch den Überdruckausgleich eine Beschädigung des Mediums verhindert, insbesondere wenn die Spaltdichtung dem zu verarbeitenden Medium angepasst ist. Die gleichen Vorteile gelten auch für den Gehäusespalt.

Ein weiterer Vorteil besteht darin, dass die zwei Förderschnecken mit einer vergleichsweise geringen Leistung angetrieben werden können, was zu einem kleineren Antriebsmotor und zu geringerem Energieverbrauch führt.

In einer anderen, bevorzugten Ausführungsform ist zwischen dem Gehäuse und den Förderschnecken, bzw. deren Schneckenstegen, eine Anzahl von Schneckenkammern ausgebildet, in der das Medium gehalten ist. Dabei sind die Schneckenkammern entsprechend der Spaltdichtung des Schnekken- und/oder Gehäusespalt quasi geschlossen ausgeführt, so dass zwar der gewünschte Druck aufgebaut werden kann und dass eine Zwangsförderung der Kunststoffschmelze erreicht wird, dass aber auch im Falle von (lokal) überhöhtem Druck ein gewisser Druckausgleich stattfindet.

In einer bevorzugten Ausführungsform erstreckt sich eine Schneckenkammer entlang einer Steigung eines Schneckensteges. Der Anfang und das Ende der Schneckenkammer befindet sich dabei in der Schnittstelle der beiden Förderschnecken, also in derjenigen Ebene, die durch die Achsen der beiden Förderschnecken definiert ist. Dies hat den Vorteil, dass hierdurch das Medium einen definierten Platz innehat und nicht mit anderem Medium gemischt wird. Gleichzeitig ermöglicht dies einen effizienten Druckaufbau an der Lochscheibe.

In einer weiteren, bevorzugten Ausführungsform ist sowohl zwischen dem Schneckensteg und dem Gehäuse ein Gehäusespalt, als auch zwischen dem Schneckensteg und seiner benachbarten Förderschnecke ein Schneckenspalt ausgebildet, die beide als Spaltdichtung ausgeführt sind, so dass das Medium im Wesentlichen in der betreffenden Schneckenkammer gehalten wird, ohne dass über die Spalten (Spaltdichtung) ein signifikanter Rückfluss von Medium in eine benachbarte rückwärtige Schneckenkammer erfolgt. Dies hat den Vorteil, dass hierdurch eine Abdichtung zwischen den Schneckenkammern erreicht wird, die einen hohen Druck in der einzelnen Schneckenkammer, eine Zwangsförderung der Kunststoffschmelze und einen Druck von über 400 bar, bis zu 600 bar an der Lochscheibe erlauben.

In noch einer weiteren, bevorzugten Ausführungsform ist der Gehäusespalt und/oder der Schneckenspalt zwischen 0,05 mm und 2 mm breit. Letztendlich hängt die Spaltbreite, und somit die Größe der Spaltdichtung, von dem zu verarbeitenden Medium und dessen Zusatzstoffen ab. Bei einem hoch gefüllten Kunststoff mit einem Kalziumkarbonatanteil von 80 % und einem Druck an der Lochscheibe von 500 bar hat sich eine Spaltbreite von 0,5 mm als vorteilhaft erwiesen.

Noch ein weiterer Vorteil besteht darin, dass durch das Zusammenwirken der beiden exakt ineinander greifenden Förderschnecken mit den korrespondierend ausgeführten Schneckenstegen einerseits und durch die Zwangsförderung andererseits ein rascher Druckaufbau erfolgt, so dass bei vergleichsweise kurzer Bauweise der Schmelzepumpe hohe Drücke erreicht werden, die Verweildauer in der Schmelzepumpe gering ist und so dass die thermische und mechanisch Schädigung der Schmelze niedrig ist.

In noch einer weiteren, vorteilhaften Ausführungsform ist die Schmelzepupe derart ausgelegt, dass die Förderschnecken mit Drehzahlen zwischen 30 U/Min und 300 U/Min, vorzugsweise mit Drehzahlen zwischen 50 U/Min und 150 U/Min rotieren, je nach Art der Kunststoffschmelze. Dies hat den Vorteil, dass die gewählte Drehzahl zumindest in den meisten Fällen oberhalb der Drehzahl einer Zahnradpumpe oder einer Einschneckenpumpe liegt, so dass in Zusammenhang mit der durch die Geometrie bedingten Zwangsförderung der Schmelze diese nahezu pulsationslos gefördert wird.

Ein Vorteil der auf maximal 300 U/Min gegrenzten Drehzahl besteht darin, dass die bei hohen Drehzahlen auftretende schädliche Scherung der Polymerketten vermieden wird .

In einer bevorzugten Ausführungsform erreicht die Schmelzepumpe bei einem Längen-/Durchmesserverhältnis der Förderschnecke von 2 bis 5, vorzugsweise 3,5 einen Druck von mehr als 250 bar, bis zu 600 bar, an der Lochscheibe. Dies hat den Vorteil, dass die Schmelzepumpe kostengünstig hergestellt und Platz sparend eingesetzt werden kann.

Weitere Vorteile der erfindungsgemäßen Schmelzepumpe ergeben sich aus der beigefügten Zeichnung und den nachstehend beschriebenen Ausführungsformen. Ebenso können die vorstehend genannten und die noch weiter ausgeführten Merkmale erfindungsgemäß jeweils einzeln oder in beliebigen Kombinationen miteinander verwendet werden. Die erwähnten Ausführungsformen sind nicht als abschließende Aufzählung zu verstehen, sondern haben vielmehr beispielhaften Charakter. Es zeigen:
- Fig. 1: eine Draufsicht auf eine Vorrichtung zur Herstellung von Kunststoffgranulat, Strangpressprofilen oder Formteilen aus einer Kunststoffschmelze in schematischer Darstellung mit einer ersten Ausführungsform einer erfindungsgemäßen Schmelzepumpe;
- Fig. 2: eine im Schnitt dargestellte Seitenansicht der Schmelzepumpe gemäß Fig. 1;
- Fig. 3: eine im Schnitt dargestellte Seitenansicht einer zweiten Ausführungsform einer erfindungsgemäßen Schmelzepumpe, geschnitten entlang Linie III - III in Fig. 5a;
- Fig. 4: eine im Schnitt dargestellt Seitenansicht der Schmelzepumpe gemäß Fig. 3, geschnitten entlang Linie IV - IV in Fig. 5b;
- Fig. 5a/b: eine Schnittdarstellung durch die Schmelzepumpe gemäß Fig. 3, geschnitten entlang Linie V - V in Fig. 3.
- Fig. 6: eine Seitenansicht einer Förderschnecke einer dritten Ausführungsform einer erfindungsgemäßen Schmelzepumpe;
- Fig. 7: eine Frontansicht der Förderschnecke gemäß Fig. 6;
- Fig. 8: eine im Schnitt dargestellte Seitenansicht der Förderschnecke gemäß Fig. 6, geschnitten entlang Linie VIII - VIII in Fig. 6;
- Fig. 8a: eine Detailvergrößerung gemäß Kreislinie VIIIa in Fig. 8;
- Fig. 9: eine perspektivisch dargestellte Ansicht einer Förderschnecke einer vierten Ausführungsform einer erfindungsgemäßen Schmelzepumpe;
- Fig. 10: eine Seitenansicht der Förderschnecke gemäß Fig. 9;
- Fig.11: eine Draufsicht der Förderschnecke gemäß Fig. 9;
- Fig. 12: eine Frontansicht der Förderschnecke gemäß Fig. 9.
- Fig. 13: eine im Schnitt dargestellte Seitenansicht einer fünften Ausführungsform einer erfindungsgemäßen Schmelzepumpe;
- Fig. 14: eine Explosionsdarstellung der Kupplung der Schmelzepumpe gemäß Fig. 13;
- Fig. 15: eine Explosionsdarstellung der Kupplung einer sechsten Ausführungsform einer erfindungsgemäßen Schmelzepumpe.

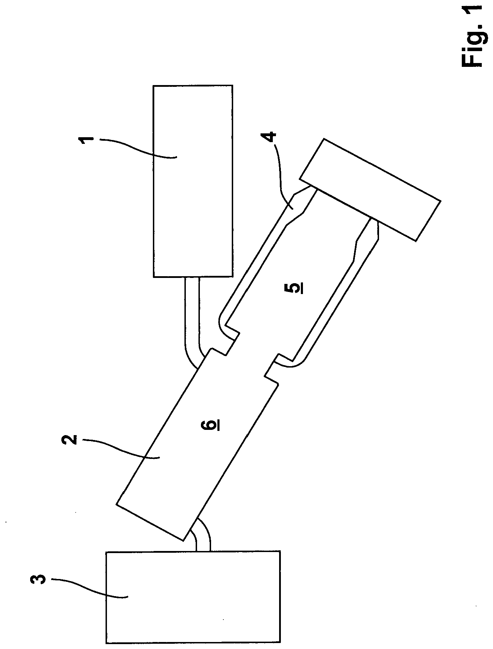

In Fig. 1 ist schematisch eine Vorrichtung zur Herstellung von Kunststoffgranulat, Kunststoffprofilen oder Kunststoffformteilen aus einer Kunststoffschmelze dargestellt, mit einer Schneckenmaschine 1 zum Mischen und Kneten der Ausgangsmaterialien zu einer Kunststoffschmelze, einer ersten Ausführungsform einer erfindungsgemäßen Schmelzepumpe 2 zum Verdichten der Kunststoffschmelze und einem Werkzeug 3, hier einer Lochscheibe, durch die die auf über 50 bar verdichtete Kunststoffschmelze hindurchgedrückt wird, um das gewünschte Kunststoffgranulat zu erzeugen. In einer hier nicht dargestellten Ausführungsform wird anstelle der Lochscheibe ein Strangpresswerkzeug zur Herstellung der gewünschten Kunststoffprofile oder der gewünschten Kunststoffformteile eingesetzt, wobei am Werkzeug ein Druck von über 250 bar anzulegen ist.

In der hier dargestellten Ausführungsform ist die Schmelzepumpe 45° zur Schneckenmaschine geneigt angeordnet, um den Platzaufwand am Fabrikationsstandort zu reduzieren.

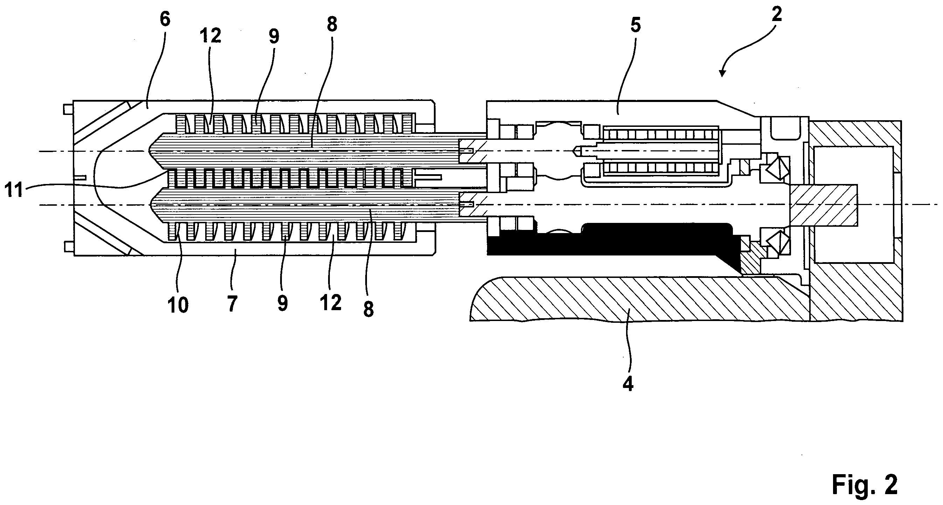

Wie insbesondere Fig. 2 zu entnehmen ist, umfasst die Schmelzepumpe 2 einen Antrieb, hier einen Elektromotor 4, ein Getriebe 5 und einen Verdichter 6. Im Gehäuse 7 des Verdichters 6 sind zwei Förderschnecken 8 parallel zueinander angeordnet gehalten und drehen sich gegenläufig. Die Förderschnecken 8 sind mit dem Getriebe 5 verbunden, welches an den Elektromotor 4 angeschlossen ist. Jede der beiden Förderschnecken 8 besitzt einen im Wesentlichen radial abstehenden, schraubenförmig umlaufenden Schneckensteg 9, wobei der Schneckensteg 9 der einen Förderschnecke 8 in den Schneckensteg 9 der anderen Förderschnecke 8 derart eingreift, dass eine Zwangsförderung der Kunststoffschmelze erfolgt.

In der in Fig. 2 dargestellten ersten Ausführungsform einer erfindungsgemäßen Schmelzepumpe 2 drehen sich die beiden Förderschnecken 8 gegenläufig. Um einen korrekten, wechselseitig exakten Eingriff ineinander zu gewährleisten sind die Förderschnecken 8 über das Getriebe 5 zwangsgekoppelt, sodass ein Gleichlauf der Förderschnecken 8 gewährleistet ist. Dabei werden beide Förderschnecken 8 synchronisiert angetrieben.

Das Gehäuse 7 ist derart korrespondierend zu den Förderschnecken 8 geformt, dass zwischen dem äußeren Rand des Schneckensteges 9 und dem Gehäuse 7 ein schmaler Gehäusespalt 10 verbleibt, der zwischen 0,05 mm und 2 mm betragen kann, in der hier dargestellten Ausführungsform 0,5 mm beträgt.

Mit dem radial abstehenden Schneckensteg 9 und einem Flankenwinkel auf jeder Seite des Schneckensteges 9 von Null Grad bei plan ausgeführten Flanken und insbesondere einer plan ausgeführten Stegoberfläche ergibt sich ein im Querschnitt rechteckiger Schneckensteg 9. Gleichzeitig entspricht der Abstand benachbarter Schneckenstege 9 der Breite eines Schneckensteges 9. Daraus ergibt sich, dass der Schneckensteg 9 der einen Förderschnecke 8 passgenau in den Zwischenraum des Schneckensteges 9 der anderen Förderschnecke 8 eingreift. Dabei ist der zwischen den Schneckenstegen 9 und den Förderschnecken 8 verbleibende Schnekkenspalt 11 auf ein Minimum reduziert und beträgt zwischen 0,05 mm und 2 mm, vorzugsweise 0,5 mm. Der tatsächlich gewählte Schneckenspalt 11 ist abhängig von dem eingesetzten Medium, wobei der Schneckenspalt 11 bei zunehmender Zähigkeit des Mediums entsprechend größer gewählt ist. Durch den auf ein Minimum reduzierten Schneckenspalt 11 entsteht eine Dichtung zwischen den benachbarten Förderschnecken 8, so dass sich zwischen dem Gehäuse 4, den Schneckenstegen 9 und den Förderschnecken 8 eine Anzahl von Schneckenkammern 12 ausbilden, wobei aufgrund der Dichtung jede Schneckenkammer 12 abgeschlossen ist und die darin befindliche Kunststoffschmelze kontinuierlich zwangsgefördert wird. Durch die dicht aneinander kämmenden Förderschnecken 8 wird ein Rückfluss eines Teiles der Kunststoffschmelze auf ein Minimum reduziert, so dass auch der Druckverlust auf ein Minimum reduziert ist. Dies wird auch als axial dicht bezeichnet.

Um eine hohe Förderleistung zu erreichen sind die Schneckenkammern 12 vergleichsweise groß ausgeführt. Dies wird erreicht durch hohe Schneckenstege 9, wobei das Verhältnis des Außendurchmessers (Dₐ) zum Kerndurchmesser (Dᵢ) zwei beträgt.

Um eine geringe Baugröße der Schmelzepumpe 2 zu realisieren, besitzen die Förderschnecken 8 in der hier dargestellten Ausführungsform ein Längen-/Außendurchmesserverhältnis von 3,5.

Die innerhalb des Gehäuses 7 ausgebildeten Schneckenkammern 12 sind nach Außen vom Gehäuse 7 und zur Seite vom Schneckensteg 9 begrenzt. In dem Bereich, in dem die Schneckenstege 9 benachbarter Förderschnecken 8 ineinander greifen sind die Schneckenkammern 12 durch die Dichtwirkung voneinander getrennt. Folglich erstreckt sich eine Schneckenkammer 12 über einen Schneckengang.

Die Ausgestaltung der Breite des Gehäuse- 10 und/oder Schneckenspaltes 11 hängt von den verwendeten Materialien ab. So hat sich beispielsweise bei der Verarbeitung von hochgefüllten Kunststoffen mit einem Kalziumkarbonatanteil von 80 % bei einem benötigten Druck von 250 bar eine Breite von 0,5 mm bewährt. Bei einem Medium mit einer höheren Fließfähigkeit wird der Spalt kleiner gehalten, bei einem Medium mit einer geringern Fließfähigkeit wird der Spalt größer ausgeführt. Für den Fall, dass im Medium harte Partikel, Fasern oder Pigmente untergemischt sind, kann der Spalt ebenfalls größer ausgeführt sein.

Dabei ermöglicht der Gehäuse- 10 und der Schneckenspalt 11 die Ausbildung der in sich quasi geschlossenen Schneckenkammern 12, wodurch ein Druckaufbau hin zur Lochscheibe 3 erreicht wird, unter anderem, weil hierdurch ein signifikanter Rückfluss des Mediums verhindert wird.

Für den Fall, dass der Druck lokal einmal über das gewünschte Maß hinaus steigt, so wirkt der Spalt ausgleichend, denn dann kann etwas Kunststoffschmelze in die benachbarte Schneckenkammer 12 entweichen, was lokal den Druck wieder senkt und Verstopfungen und/oder Beschädigungen vermeidet. Somit hat die Größe des Spaltes auch Einfluss auf den Druckausgleich. Ist ein höherer Druck am Werkzeug 3 gewünscht, so müssen der Gehäusespalt 10 und der Schneckenspalt 11 verringert werden. Das gilt auch für den Fall, dass eine hochviskosere Kunststoffschmelze verarbeitet wird. Bei einer niedrigviskosen Kunststoffschmelze kann der Spalt auch verbreitert werden.

Im Ergebnis ist der Spalt entsprechend der hier genannten Kriterien für jeden Einzelfall auszuwählen. Dabei hat sich eine Spaltbreite zwischen 0,05 mm und 2 mm bewährt. Alle hier genannten Ausführungsformen gelten als axial dicht.

Die hier beschriebenen Ausführungsformen der Schmelzepumpe 2 mit einer Spaltbreite von 0,5 mm sind besonders vorteilhaft einsetzbar für hochgefüllte Kunststoffe, das heißt für Kunststoffe mit einem hohen Feststoffanteil, wie zum Beispiel Kalziumkarbonat, Holz oder Carbide. Dabei besitzt der hochgefüllte Kunststoff einen Kalziumkarbonatanteil von mindestens 80 %.

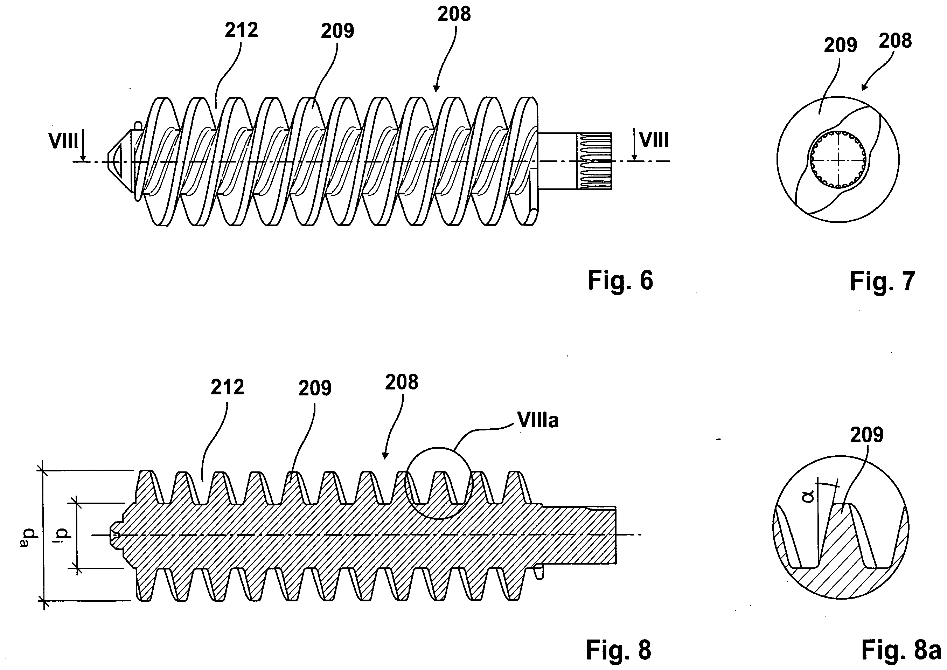

Auf Grund der Vielzahl von Kunststoffschmelzen können die Flankenwinkel (auch Profilwinkel genannt) in jeder notwendigen Form angepasst werden. Dabei hat es sich als vorteilhaft erwiesen, zumindest bei gegenläufigen Förderschnecken 8 ein rechteckiges Gewindeprofil wie in Fig. 2 gezeigt oder ein wie in Fig. 8 dargestellt trapezförmiges Gewindeprofil zu wählen.

Rechteckige Gewindeprofile, wie in Fig. 2 dargestellt werden auch zur Verarbeitung von Polyethylen (PE) eingesetzt.

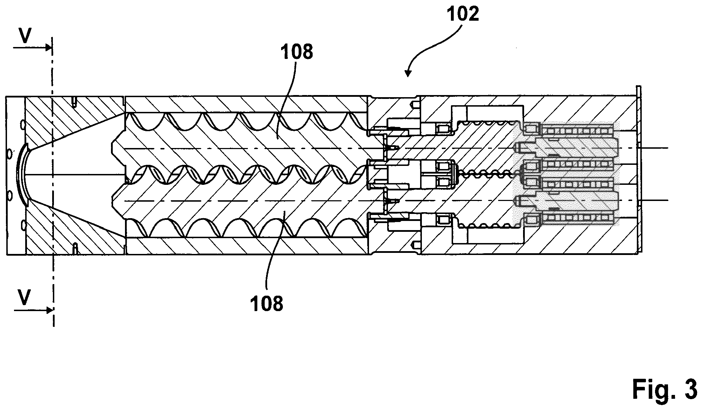

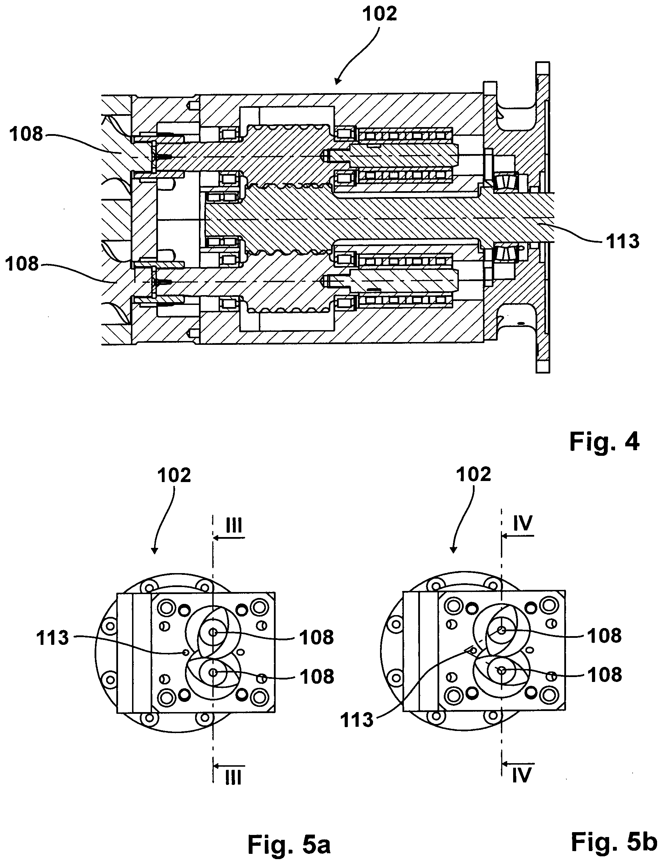

In der in den Fig. 3 bis 5 dargestellten zweiten Ausführungsform einer erfindungsgemäßen Schmelzepumpe 102 drehen sich die beiden Förderschnecken 108 gleichläufig und werden von einer gemeinsamen Antriebswelle 113 angetrieben. Auch hier greifen die Schneckenstege der Förderschnecken 108 derart ineinander, dass ein minimaler Schneckenspalt verbleibt.

Derartige, hochgefüllte Kunststoffe können mit der Schmelzepumpe 2, 102 material schonend transportiert und verdichtet werden, wobei der Kunststoff bei Umgebungsdruck in die Schmelzepumpe 102 eintritt und mit einem Druck von 50 bar bis zu 600 bar, vorzugsweise 400 bar die Schmelzepumpe 102 wieder verlässt. Auch hier ist das Verhältnis von Dₐ zu Dᵢ gleich 2, um eine hohe Förderleistung zu erzielen.

In den Fig. 6 - 8 ist eine Förderschnecke 208 einer dritten Ausführungsform einer erfindungsgemäßen Schmelzepumpe dargestellt. Diese Förderschnecke 208 ist zweigängig ausgeführt und ihre Schneckenstege 209 sind im Querschnitt trapezförmig mit einem Flankenwinkel von 13° ausgeführt. Diese Förderschnecke 208 wird gegenläufig eingesetzt und wird bevorzugt zur Verarbeitung von PVC verwendet. Auch hier bilden sich axial dichte Schneckenkammern 212, die einen guten Druckaufbau und eine gute Zwangsförderung erreichen. Auch hier ist Verhältnis von Dₐ zu Dᵢ gleich 2.

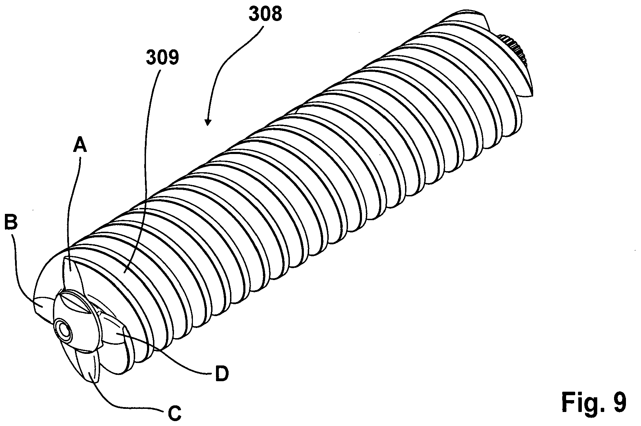

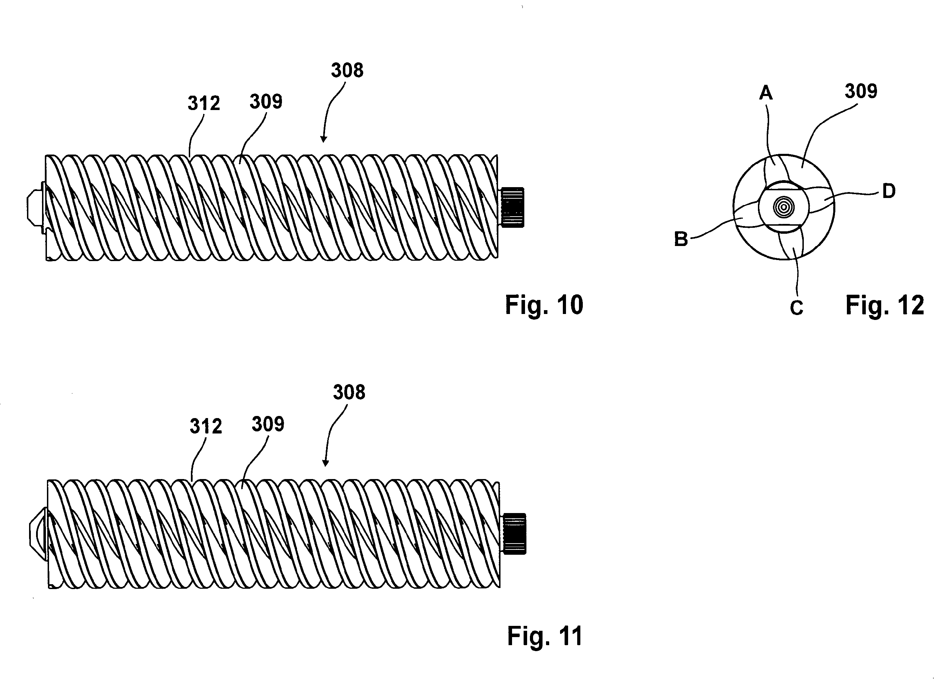

In den Fig. 9-12 ist eine Förderschnecke 308 einer vierten Ausführungsform einer erfindungsgemäßen Schmelzepumpe dargestellt. Diese Förderschnecke 308 ist viergängig (A, B, C, D) ausgeführt und ihre Schneckenstege 309 sind im Querschnitt rechteckig mit einem Flankenwinkel von 0° ausgeführt. Diese Förderschnecke 308 wird gegenläufig eingesetzt und wird bevorzugt zur Verarbeitung eines eiweißhaltigen Mediums verwendet. Auch hier bilden sich axial dichte Schneckenkammern 312, die einen guten Druckaufbau und eine gute Zwangsförderung erreichen. Auch hier ist das Verhältnis von Dₐ zu Dᵢ gleich 2.

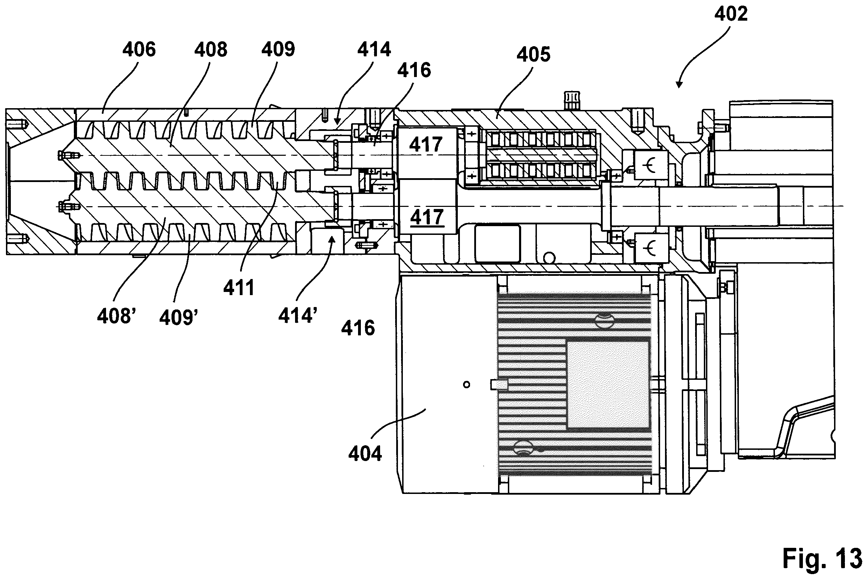

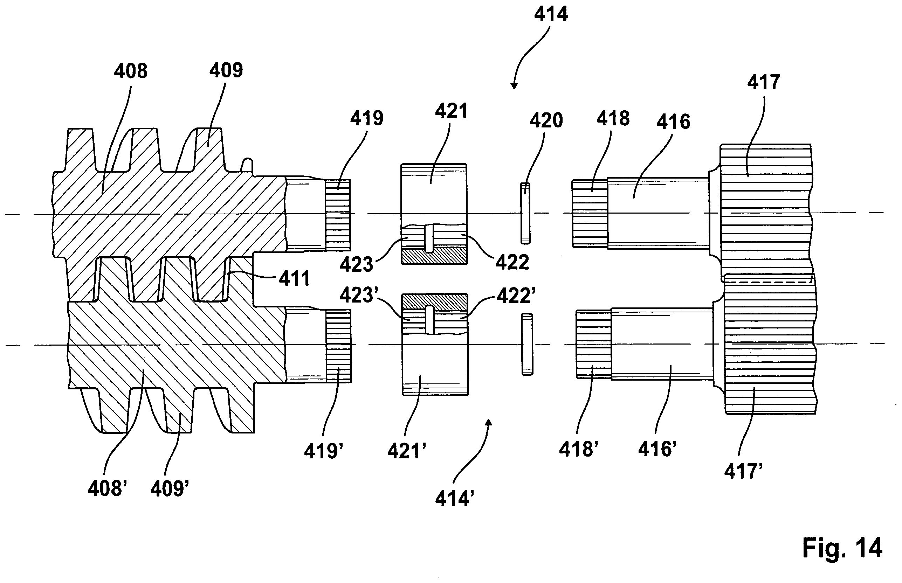

Bei der in den Fig. 13 und 14 dargestellten fünften Ausführungsform einer erfindungsgemäßen Schmelzepumpe 402 ist der Verdichter 406, das Getriebe 405 und der Antrieb 404 identisch wie in der ersten Ausführungsform gemäß Fig. 2 ausgebildet mit dem einzigen Unterschied, dass in der fünften Ausführungsform die beiden Förderschnecken 408 und 408' über je eine Kupplung 414 und 414' lösbar mit einer Abtriebswelle 416, 416' des Getriebes 405 verbunden sind. An jeder der beiden Abtriebswellen 416, 416' ist je eine Schrägverzahnung 417, 417' ausgebildet, die derart ineinander greifen, dass hierdurch die beiden Abtriebswellen 416, 416' und damit auch die Förderschnecken 408, 408', synchronisiert sind. Hierdurch wird ein exakter Gleichlauf der Förderschnecken 408, 408' erreicht, so dass sich die Position der Schneckenstege 409, 409' zueinander während des Betriebes nicht verändert.

Jede Kupplung 414, 414' umfasst einen an einem freien Ende der Abtriebswelle 416, 416' vorgesehenen Abtriebszahnkranz 418, 418', einen an einem korrespondierenden freien Ende der Förderschnecke 408, 408' vorgesehenen Antriebszahnkranz 419, 419', eine Einstellscheibe 420, 420' und eine Kupplungshülse 421, 421'. Die Kupplungshülse 421, 421' ist innenseitig mit einer Abtriebsverzahnung 422, 422' und einer Antriebsverzahnung 423, 423' ausgestattet, wobei die Abtriebsverzahnung 422, 422' korrespondierend zum Abtriebszahnkranz 418, 418' an der Abtriebswelle 416, 416' ausgebildet ist, während die Antriebsverzahnung 423, 423' korrespondierend zum Antriebszahnkranz 419, 419' an der Förderschnecke 408, 408' ausgebildet ist. In der hier dargestellten Ausführungsform ist eine Geradverzahnung nach DIN 54 80 gewählt worden.

Im montierten Zustand ist die Kupplungshülse 421, 421' sowohl über den Abtriebszahnkranz 418, 418', als auch über den Antriebszahnkranz 419, 419' geschoben, so dass die Abtriebsverzahnung 422, 422' mit dem Abtriebszahnkranz 418, 418' und die Antriebsverzahnung 423, 423' mit dem Antriebszahnkranz 419, 419' im Eingriff sind. Hierdurch kann die Kupplungshülse 421, 421' die Kräfte und Momente von der Abtriebswelle 416, 416' auf die Förderschnecke 408, 408' übertragen.

Damit die Schneckenstege 409, 409' der sich kämmenden Förderschnekken 408, 408' stets ineinander greifen ist es erforderlich, die Förderschnecken 408, 408' relativ zueinander zu justieren. Dies geschieht durch verdrehen einer oder beider Förderschnecken 408, 408' um ihre jeweilige Längsachse, bis die gewünschte Position erreicht ist. Dabei wird auch die Größe des Schneckenspaltes 411 auf das gewünschte Maß eingestellt.

Der Abtriebszahnkranz 418, 418' der Abtriebswelle 416, 416' weist eine Anzahl von Zähnen auf, die sich von der Anzahl der Zähne im Antriebszahnkranz 419, 419' der Förderschnecke 408, 408' unterscheidet.

Somit kann die Förderschnecke 408, 408' entweder entsprechend der Teilung im Antriebszahnkranz 419, 419' oder entsprechend der Teilung im Abtriebszahnkranz 418, 418' versetzt werden. Selbstverständlich kann die Förderschnecke 408, 408' auch sowohl im Antriebs- 419, 419' als auch im Abtriebszahnkranz 418, 418' versetzt werden. Außerdem besteht auch die Möglichkeit, die erste Förderschnecke 408 anders zu versetzen, als dies bei der zweiten Förderschnecke 408' erfolgt.

Im Ergebnis ergibt sich hierdurch eine Vielzahl von Möglichkeiten zur Positionierung der Förderschnecken 408, 408' relativ zueinander. In der Praxis wird die Verzahnungskombination zur optimalen Positionierung der Förderschnecken 408, 408' relativ zueinander rechnerisch mittels einer geeigneten Software ermittelt. Entsprechend der ermittelten Verzahnungskombination wird dann die Kupplungshülse 421, 421' auf die Abtriebswellen 416, 416' gesteckt und die Förderschnecken 408, 408' werden dementsprechend in der ermittelten Position in die Kupplungshülsen 421, 421' gesteckt.

Mit der Einstellscheibe 420, 420' wird die Position der jeweiligen Förderschnecken 408, 408' in axialer Richtung eingestellt. Dabei wird zunächst die tatsächliche Position der Schneckenstege 409, 409' zueinander ermittelt. Dementsprechend wird dann eine erste Einstellscheibe 420 mit einer ersten Dicke und eine zweite Einstellschraube 420' mit einer zweiten Dicke derart ausgewählt, dass sich der gewünschte Schneckenspalt 411 einstellt, wobei die erste Einstellscheibe 420 zwischen der ersten Förderschnecke 408 und der ersten Abtriebswelle 416 eingesetzt wird, während die zweite Einstellscheibe 420' zwischen der zweiten Förderschnecke 408' und der zweiten Abtriebswelle 416' eingesetzt wird.

In der in den Fig. 13 und 14 dargestellten fünften Ausführungsform sind die Teilungen, das heißt die Anzahl der Zähne, der Abtriebszahnkränze 418 der ersten und der zweiten Abtriebswelle 416, 416' gleich. Analoges gilt auch für die Antriebszahnkränze 419, 419' der ersten und der zweiten Förderschnecke 408, 408'.

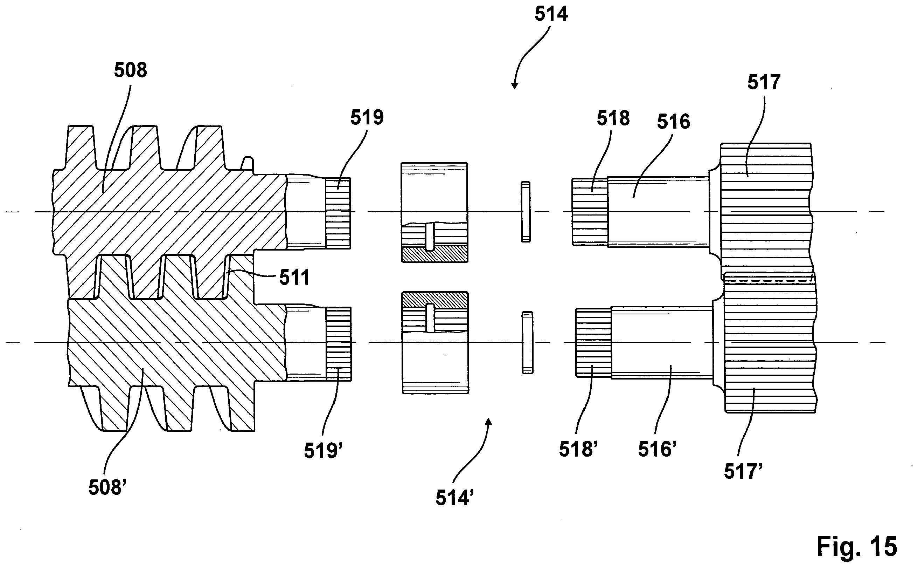

Die in Fig. 15 dargestellte sechste Ausführungsform einer erfindungsgemäßen Schmelzepumpe unterscheidet sich von der in den Fig. 13 und 14 dargestellten fünften Ausführungsform lediglich dadurch, dass der Abtriebszahnkranz 518 der ersten Abtriebswelle 516 eine andere Anzahl von Zähnen aufweist, wie der Abtriebszahnkranz 518' der zweiten Abtriebswelle 516'. So weist der als Geradverzahnung ausgelegte Abtriebszahnkranz 518 der ersten Abtriebswelle 516 insgesamt 16 Zähne auf, wobei der Abtriebszahnkranz 518' der zweiten Abtriebswelle 516' insgesamt 17 Zähne aufweist, während der Antriebszahnkranz 519 der ersten Förderschnecke 508 genauso wie der Antriebszahnkranz 519' der zweiten Förderschnecke 508' jeweils 18 Zähne aufweist. Hierdurch sind in den beiden Kupplungen 514, 514' drei unterschiedliche Zahnkränze vorgesehen, so dass sich die Zahl der möglichen Verzahnungskombinationen deutlich erhöht mit der Folge, dass der Schneckenspalt 511 noch präziser einstellbar ist.

In einer anderen, hier nicht dargestellten Ausführungsform sind alle vier in den beiden Kupplungen vorgesehenen Zahnkränze mit einer unterschiedlichen Anzahl von Zähnen ausgestattet, so dass noch mehr Verzahnungskombinationen zur Verfügung stehen.

## Patentansprüche

1. Schmelzepumpe zum Aufbau von Druck zwecks Durchdrücken von Kunststoffschmelze durch ein Werkzeug umfassend einen Verdichter (406) mit zwei in einem Gehäuse angeordneten Förderschnecken (408, 408'), ein Getriebe (405) über welches die Förderschnecken (408, 408'; 508, 508') synchronisiert antreibbar sind und einen Antrieb (404), wobei das Getriebe (405) zwischen dem Antrieb (404) und dem Verdichter (406) angeordnet ist, wobei im Getriebe (405) für jede Förderschnecke (408, 408'; 508, 508') eine eigene Abtriebswelle (416, 416'; 516, 516') vorgesehen ist und wobei die Förderschnecke (408, 408'; 508, 508') mit der entsprechenden Abtriebswelle (416, 416') über eine Kupplung (414, 414'; 514, 51'4) verbunden ist, wobei die Kupplung (414, 414'; 514, 514') einen an der Abtriebswelle (416, 416'; 516, 516') vorgesehenen Abtriebszahnkranz (418, 418'; 518, 518'), einen an der Förderschnecke (408, 408'; 508, 508') vorgesehenen Antriebszahnkranz (419, 419'; 519, 519') und eine den Abtriebszahnkranz (418, 418'; 518, 518') und den Antriebszahnkranz (419, 419'; 519, 519') erfassende Kupplungshülse (421, 421') umfasst **dadurch gekennzeichnet, dass** der Antriebszahnkranz (419, 419'; 519, 519') und der Abtriebszahnkranz (418, 418'; 518, 518') eine unterschiedliche Anzahl von Zähnen aufweist.

2. Schmelzepumpe nach Anspruch 1,
**dadurch gekennzeichnet,**
**dass** der Antriebszahnkranz der ersten Förderschnecke gegenüber dem Antriebszahnkranz der zweiten Förderschnecke eine unterschiedliche Anzahl von Zähnen aufweist.

3. Schmelzepumpe nach einem der vorangehenden Ansprüche,
**dadurch gekennzeichnet,**
**dass** der Abtriebszahnkranz (518) der ersten Abtriebswelle (516) gegenüber dem Abtriebszahnkranz (518') der zweiten Abtriebswelle (516') eine unterschiedliche Anzahl von Zähnen aufweist.

4. Schmelzepumpe nach einem der vorangehenden Ansprüche,
**dadurch gekennzeichnet,**
**dass** die Kupplung (414, 414'; 514, 514') eine austauschbare Einstellscheibe (420, 420') umfasst, welche zwischen der Abtriebswelle (418, 418'; 518, 518') und der Förderschnecke (408, 408'; 508, 508') vorgesehen ist.

5. Schmelzepumpe nach Anspruch 4,
**dadurch gekennzeichnet,**
**dass** die Einstellscheibe (420) der ersten Kupplung (414; 514) gegenüber der Einstellscheibe (420') der zweiten Kupplung (414'; 514') eine unterschiedliche Dicke aufweist.

6. Schmelzepumpe nach einem der vorangehenden Ansprüche,
**dadurch gekennzeichnet,**
**dass** die erste Abtriebswelle (416; 516) über eine Schrägverzahnung (417, 417'; 517, 517') mit der zweiten Abtriebswelle (416'; 516') wirkverbunden ist, um die Förderschnecken (408, 408'; 508, 508') synchronisiert anzutreiben.

7. Schmelzepumpe nach einem der vorangehenden Ansprüche,
**dadurch gekennzeichnet,**
**dass** zwei Förderschnecken (8, 208, 408, 408', 508, 508') übereinander, also vertikal, angeordnet sind.

8. Schmelzepumpe nach einem der vorangehenden Ansprüche,
**dadurch gekennzeichnet,**
**dass** die Förderschnecke (8, 108, 208, 308, 408, 408', 508, 508') derart ausgebildet ist, dass das Verhältnis von Außendurchmesser (Dₐ) zu Kerndurchmesser (Dᵢ) zwischen 1,6 und 6, vorzugsweise zwischen 2,0 und 5,0, beträgt.

9. Schmelzepumpe nach einem der vorangehenden Ansprüche,
**dadurch gekennzeichnet,**
**dass** an der Förderschnecke (8, 108, 208, 308, 408, 408', 508, 508') vorgesehene Schneckenstege (9, 209, 309, 409, 409') derart ausgebildet sind, dass eine Zwangsförderung des Mediums erfolgt.

10. Schmelzepumpe Anspruch 9,
**dadurch gekennzeichnet,**
**dass** die Schneckenstege (9, 209, 309, 409, 409') ein rechteckiges oder trapezförmiges Gewindeprofil aufweisen, wobei der Schneckensteg (9, 209, 309, 409, 409') einen Profilwinkel (α) zwischen 0° und 20° aufweist.

11. Schmelzepumpe nach einem der Ansprüche 9 bis 10,
**dadurch gekennzeichnet,**
**dass** die Schneckenstege (9, 209, 309, 409, 409') und die Förderschnecken (8, 108, 208, 308, 408, 408', 508, 508') derart korrespondierend zueinander ausgebildet und ineinander greifend angeordnet sind, dass sich zwischen dem Gehäuse (4) und den Förderschnecken (8, 108, 208, 308, 408, 408', 508, 508') mit seinen Schneckenstegen (9, 209, 309, 409, 409') mindestens eine Schneckenkammer (12, 212, 312) ausbildet, die bis auf einen Gehäusespalt (10) und/oder einen Schneckenspalt (11, 411, 511) abgeschlossen ist.

12. Schmelzepumpe nach einem der Ansprüche 9 bis 11,
**dadurch gekennzeichnet,**
**dass** das Gehäuse (7) korrespondierend zur Außenkontur der Förderschnecken (8, 108, 208, 308, 408, 408', 508, 508') derart ausgebildet ist, dass ein zwischen der Förderschnecke (8, 108, 208, 308, 408, 408', 508, 508') und dem Gehäuse (7) verbleibender Gehäusespalt (10) so klein ausfällt, dass der Gehäusespalt (10) eine Spaltdichtung bildet, und dass die Schneckenstege (9, 209, 409, 409') und die Förderschnecken (8, 108, 208, 308, 408, 408', 508, 508') derart korrespondierend zueinander ausgebildet und ineinander greifend angeordnet sind, dass ein zwischen dem Schneckensteg (9, 209, 309, 409, 409') und der Förderschnecke (8, 108, 208, 308, 408, 408', 508, 508') verbleibender Schneckenspalt (11, 411, 511) so klein ausfällt, dass der Schneckenspalt (11, 411, 511) eine Spaltdichtung bildet.

13. Schmelzepumpe nach Anspruch 12,
**dadurch gekennzeichnet,**
**dass** der Gehäusespalt (10) und/oder der Scheckenspalt (11, 411, 511) in Abhängigkeit vom Medium so gewählt ist, dass der Verdichter (6, 406) als axial dicht gilt.

14. Schmelzepumpe nach einem der vorangehenden Ansprüche,
**dadurch gekennzeichnet,**
**dass** der Antrieb (4, 404) und das Getriebe (5, 405) für eine Drehzahl der Förderschnecken (8, 108, 208, 308, 408, 408', 508, 508') zwischen 30 U/Min und 300 U/Min, vorzugsweise zwischen 50 U/Min und 150 U/Min ausgelegt sind.

15. Schmelzepumpe nach einem der vorangehenden Ansprüche,
**dadurch gekennzeichnet,**
**dass** die Förderschnecke (8, 108, 208, 308, 408, 408', 508, 508') ein Längen-/Außendurchmesserverhältnis von 2 bis 5, vorzugsweise von 3,5 aufweist.

## Claims

1. A melt pump for building up pressure for pressing a melt of synthetic material through a tool, comprising a compressor (406) with two worm conveyors (408, 408') disposed in a housing, a transmission (405) by means of which the worm conveyors (408, 408') are synchronously drivable and a drive (404), wherein the transmission (405) is disposed between the drive (404) and the compressor (406), wherein each worm conveyor (408, 408'; 508, 508') in the transmission (405) is provided with its own output shaft (416, 416'; 516, 516') and wherein the worm conveyor (408, 408'; 508, 508') is connected to the corresponding output shaft (416, 416') by way of a coupling (414, 414'; 514, 514'),
wherein the coupling (414, 414'; 514, 514') comprises an output gear (418, 418'; 518, 518') provided on the output shaft (416, 416'; 516, 516'), a drive gear (419, 419'; 519, 519') provided on the worm conveyor (408, 408'; 508, 508') and a coupling sleeve (421, 421') gripping the output gear (418, 418', 518, 518') and the drive gear (419, 419'; 519, 519'),
**characterized in that**
the drive gear (419, 419'; 519, 519') and the output gear (418, 418', 518, 518') have a different number of teeth.

2. The melt pump according to claim 1,
**characterized in that**
the drive gear of the first worm conveyor has a different number of teeth than the drive gear of the second worm conveyor.

3. The melt pump according to one of the afore-mentioned claims,
**characterized in that**
the output gear (518) of the first output shaft (516) has a different number of teeth than the output gear (518') of the second output shaft (516').

4. The melt pump according to one of the afore-mentioned claims,
**characterized in that**
the coupling (414, 414'; 514, 514') comprises an exchangeable adjustment disc (420, 420'), which is provided between the output shaft (418, 418'; 518, 518') and the worm conveyor (408, 408'; 508, 508').

5. The melt pump according to claim 4,
**characterized in that**
the adjustment disc (420) of the first coupling (414; 514) has a different thickness than the adjustment disc (420') of the second coupling (414'; 514').

6. The melt pump according to one of the afore-mentioned claims,
**characterized in that**
the first output shaft (416; 516) is operatively connected with the second output shaft (416'; 516') via a helical gearing (417, 417'; 517, 517') in order to synchronously drive the worm conveyors (408, 408'; 508, 508').

7. The melt pump according to one of the afore-mentioned claims,
**characterized in that**
two worm conveyors (8, 208, 408, 408', 508, 508') are disposed above each other, i.e. vertically.

8. The melt pump according to one of the afore-mentioned claims,
**characterized in that**
the worm conveyor (8, 108, 208, 308, 408, 408', 508, 508') is configured in such a manner that the ratio of the outer diameter (Dₐ) to the core diameter (Dᵢ) amounts to between 1.6 and 6, preferably between 2.0 and 5.0.

9. The melt pump according to one of the afore-mentioned claims,
**characterized in that**
worm flights (9, 209, 309, 409, 409') provided on the worm conveyor (8, 108, 208, 308, 408, 408', 508, 508') are configured in such a manner that a forced feed of the medium takes place.

10. The melt pump according to claim 9,
**characterized in that**
the worm flights (9, 209, 309, 409, 409') have a rectangular or trapezoidal thread profile, wherein the worm flight (9, 209, 309, 409, 409') has a profile angle (α) between 0° and 20°.

11. The melt pump according to one of the claims 9 to 10,
**characterized in that**
the worm flights (9, 209, 309, 409, 409') and the worm conveyors (8, 108, 208, 308, 408, 408', 508, 508') are configured so as to correspond to each other and disposed so as to engage with each other in such a manner, that at least one worm chamber (12, 212, 312) is formed between the housing (4) and the worm conveyors (8, 108, 208, 308, 408, 408', 508, 508') with its worm flights (9, 209, 309, 409, 409'), said chamber being closed except for a housing gap (10) and/or a worm gap (11, 411, 511).

12. The melt pump according to one of the claims 9 to 11,
**characterized in that**
the housing (7) is configured so that it corresponds to the outer contour of the worm conveyors (8, 108, 208, 308, 408, 408', 508, 508') in such a manner that a housing gap (10) remaining between the worm conveyor (8, 108, 208, 308, 408, 408', 508, 508') and the housing (7) is so small that the housing gap (10) forms a gap seal, and that the worm flights (9, 209, 409, 409') and the worm conveyors (8, 108, 208, 308, 408, 408', 508, 508') are configured so as to correspond to each other and disposed so as to engage with each other in such a manner that a worm gap (11, 411, 511) remaining between the worm flight (9, 209, 409, 409') and the worm conveyor (8, 108, 208, 308, 408, 408', 508, 508') is so small that the worm gap (11, 411, 511) forms a gap seal.

13. The melt pump according to claim 12,
**characterized in that**
the housing gap (10) and/or the worm gap (11, 411, 511) is chosen according to the medium in such a manner that the compressor (6, 406) is considered axially sealed.

14. The melt pump according to one of the afore-mentioned claims,
**characterized in that**
the drive (4, 404) and the transmission (5, 405) are designed for a rotational speed of the worm conveyors (8, 108, 208, 308, 408, 408', 508, 508') between 30 rpm and 300 rpm, preferably between 50 rpm and 150 rpm.

15. The melt pump according to one of the afore-mentioned claims,
**characterized in that**
the worm conveyor (8, 108, 208, 308, 408, 408', 508, 508') has a length/diameter ratio of 2 to 5, preferably of 3.5.

## Revendications

1. Pompe à masse fondue pour générer une pression pour presser une masse fondue de matière synthétique à travers un outil comprenant un compresseur (406) avec deux vis sans fin de transport (408, 408') disposées dans un boîtier, une transmission (405) par laquelle les vis sans fin de transport (408, 408' ; 508, 508') peuvent être entraînées de manière synchronisées et un entraînement (404), où la transmission (405) est disposée entre l'entraînement (404) et le compresseur (406), où un arbre de sortie (416, 416' ; 516, 516') propre est prévu dans la transmission (405) pour chaque vis sans fin de transport (408, 408' ; 508, 508') et où la vis sans fin de transport (408, 408' ; 508, 508') est connectée avec l'arbre de sortie (416, 416') respectif via un accouplement (414, 414' ; 514, 514'),
où l'accouplement (414, 414' ; 514, 514') comprend une couronne dentée de sortie (418, 418' ; 518, 518') prévue au niveau de l'arbre de sortie (416, 416' ; 516, 516'), une couronne dentée d'entraînement (419, 419' ; 519, 519') prévue au niveau de la vis sans fin de transport (408, 408' ; 508, 508') et un manchon d'accouplement (421, 421') saisissant la couronne dentée de sortie (418, 418' ; 518, 518') et la couronne dentée d'entraînement (419, 419' ; 519, 519'),
**caractérisée en ce que** la couronne dentée d'entraînement (419, 419' ; 519, 519') et la couronne dentée de sortie (418, 418' ; 518, 518') comportent un nombre de dents différent.

2. Pompe à masse fondue selon la revendication 1,
**caractérisée en ce que**
la couronne dentée d'entraînement de la première vis sans fin de transport comporte un nombre de dents différent de celui de la couronne dentée d'entraînement de la seconde vis sans fin de transport.

3. Pompe à masse fondue selon l'une des revendications précédentes,
**caractérisée en ce que**
la couronne dentée de sortie (518) du premier arbre de sortie (516) comporte un nombre de dents différent de celui de la couronne dentée de sortie (518') du second arbre de sortie (516').

4. Pompe à masse fondue selon l'une des revendications précédentes,
**caractérisée en ce que**
l'accouplement (414, 414' ; 514, 514') comprend un disque de réglage (420, 420') échangeable qui est prévu entre l'arbre de sortie (418, 418' ; 518, 518') et la vis sans fin de transport (408, 408' ; 508, 508').

5. Pompe à masse fondue selon la revendication 4,
**caractérisé en ce que**
le disque de réglage (420) du premier accouplement (414 ; 514) présente une épaisseur différente de celle du disque de réglage (420') du deuxième accouplement (414' ; 514').

6. Pompe à masse fondue selon l'une des revendications précédentes,
**caractérisée en ce que**
le premier arbre de sortie (416 ; 516) est relié de manière fonctionnelle avec le second arbre de sortie (416' ; 516') par l'intermédiaire d'une denture hélicoïdale (417, 417' ; 517, 517') afin d'entraîner les vis sans fin de transport (408, 408' ; 508, 508') de manière synchronisée.

7. Pompe à masse fondue selon l'une des revendications précédentes,
**caractérisée en ce que**
deux vis sans fin de transport (8, 208, 408, 408', 508, 508') sont disposées l'une au-dessus de l'autre, donc verticalement.

8. Pompe à masse fondue selon l'une des revendications précédentes,
**caractérisée en ce que**
la vis sans fin de transport (8, 108, 208, 308, 408, 408', 508, 508') est configurée de telle manière que le rapport entre le diamètre extérieur (Dₐ) et le diamètre central (Dᵢ) est compris entre 1,6 et 6, de préférence entre 2,0 et 5,0.

9. Pompe à masse fondue selon l'une des revendications précédentes,
**caractérisée en ce que**
des crêtes de vis sans fin (9, 209, 309, 409, 409') prévues sur la vis sans fin de transport (8, 108, 208, 308, 408, 408', 508, 508') sont formées de telle manière qu'un transport forcé du milieu est réalisé.

10. Pompe à masse fondue selon la revendication 9,
**caractérisée en ce que**
les crêtes de vis sans fin (9, 209, 309, 409, 409') comportent un profil de filetage rectangulaire ou trapézoïdal, où la crête de vis sans fin (9, 209, 309, 409, 409') comporte un angle de profil (α) compris entre 0° et 20°.

11. Pompe à masse fondue selon l'une des revendications 9 à 10,
**caractérisée en ce que**
les crêtes de vis sans fin (9, 209, 309, 409, 409') et les vis sans fin de transport (8, 108, 208, 308, 408, 408', 508, 508') sont configurées de manière à se correspondre et disposées de manière à s'engager l'une dans l'autre de telle manière qu'au moins une chambre de vis sans fin (12, 212, 312), qui est fermée à l'exception d'une fente de boîtier (10) et/ou d'une fente de vis sans fin (11, 411, 511), est formée entre le boîtier (4) et les vis sans fin de transport (8, 108, 208, 308, 408, 408', 508, 508') avec ses crêtes de vis sans fin (9, 209, 309, 409, 409').

12. Pompe à masse fondue selon l'une des revendications 9 à 11,
**caractérisée en ce que**
le boîtier (7) est formé de manière à correspondre au contour extérieur des vis sans fin de transport (8, 108, 208, 308, 408, 408', 508, 508') de telle manière qu'une fente de boîtier (10) restant entre la vis sans fin de transport (8, 108, 208, 308, 408, 408', 508, 508') et le boîtier (7) est si petite que la fente de boîtier (10) forme un joint labyrinthe et que les crêtes de vis sans fin (9, 209, 409, 409') et les vis sans fin de transport (8, 108, 208, 308, 408, 408', 508, 508') sont configurées de manière à se correspondre et disposées de manière à s'engager l'une dans l'autre de telle manière qu'une fente de vis sans fin (11, 411, 511) restant entre la crête de vis sans fin (9, 209, 309, 409, 409') et la vis sans fin de transport (8, 108, 208, 308, 408, 408', 508, 508') est si petite que la fente de vis sans fin (11, 411, 511) forme un joint labyrinthe.

13. Pompe à masse fondue selon la revendication 12,
**caractérisée en ce que**
la fente de boîtier (10) et/ou la fente de vis sans fin (11, 411, 511) est choisie en fonction du milieu de telle manière que le compresseur (6, 406) est considéré comme axialement étanche.

14. Pompe à masse fondue selon l'une des revendications précédentes,
**caractérisée en ce que**
l'entraînement (4, 404) et la transmission (5, 405) sont conçus pour une vitesse de rotation des vis sans fin de transport (8, 108, 208, 308, 408, 408', 508, 508') comprise entre 30 tr/min et 300 tr/min, de préférence entre 50 tr/min et 150 tr/min.

15. Pompe à masse fondue selon l'une des revendications précédentes,
**caractérisée en ce que**
la vis sans fin de transport (8, 108, 208, 308, 408, 408', 508, 508') présente un rapport longueur/diamètre extérieur de 2 à 5, de préférence de 3,5.
